# EUROPÄISCHE PATENTANMELDUNG

(11) **EP 0 650 109 A1**
(43) Veröffentlichungstag der Anmeldung: **26.04.1995**
(21) Anmeldenummer: 94115855.2
(22) Anmeldetag: 07.10.1994
(51) Int. Cl.: G05D 16/06, F16K 31/363

(54) **Druckminderer**

(30) Priorität: 09.10.1993 DE 9315290 U
(71) Anmelder: HANS SASSERATH & CO KG, D-41352 Korschenbroich (DE)
(72) Erfinder: Hecking, Willi, D-41238 Mönchengladbach (DE)
(74) Vertreter: Weisse, Jürgen, Dipl.-Phys. Patentanwalt

(57) **Zusammenfassung**

Ein Druckminderer enthält einen Gehäuseteil (10) mit einem Einlaßanschluß (12) und einem Auslaßanschluß (14), einer Trennwand (16) zwischen Einlaßanschluß (12) und Auslaßanschluß (14), die den Innenraum des Gehäuses (10) in eine Einlaßkammer (18) und eine Auslaßkammer (20) teilt und die einen Durchbruch (22) aufweist, und einem mit dem Durchbruch (22) fluchtenden Stutzen (24), der mit der Einlaßkammer (18) in Verbindung steht und ein Innengewinde (32) aufweist, einen Druckminderereinsatz (34), der in den Stutzen (24) und den Durchbruch (22) eingesetzt ist. Der Druckminderereinsatz (34) weist ein Einsatzgehäuse von trichterförmiger Grundform auf, das an seinem weiten Ende durch eine Regelmembran (40) abgeschlossen ist und eine Regeldruckkammer (46) bildet, sowie einen Ventilsitz (48), der über Stege (50) mit dem Einsatzgehäuse des Druckminderereinsatzes (34) verbunden und abdichtend in dem Durchbruch (22) der Trennwand (16) gehalten ist. Die Stege (50) enthalten Kanäle (52), welche die Auslaßkammer (20) mit der Regeldruckkammer (46) verbinden. Ein mit der Regelmembran (40) und einem Regelmembranteller (60) verbundener Ventilstößel (54) erstreckt sich durch den Ventilsitz (48) hindurch und trägt an seinem Ende einen mit dem Ventilsitz (48) zusammenwirkenden Ventilteller (66). Eine Schraubkappe (42) ist mit einem Außengewinde in das Innengewinde des Stutzens (24) eingeschraubt und klemmt den Rand der Regelmembran (40) fest. Die Schraubkappe enthält ein verstellbares Federwiderlager (64) und eine vorgespannte Schraubenfeder (62), die sich an dem Federwiderlager (64) abstützt und an dem Regelmembranteller (60) der Regelmembran (40) anliegt. Ein zylindrisches Schmutzfängersieb (98) umgibt den Druckminderereinsatz (34) und ist zwischen der Trennwand (16) und dem Einsatzgehäuse des Druckminderereinsatzes (34) auswechselbar gehalten. Ein Zuganker (102) erstreckt sich durch das Federwiderlager (64), ist an seinem regelmembranseitigen Ende (104) in einer die freie Beweglichkeit der Regelmembran (40) und des Ventilstößels (54) nicht beeinträchtigenden Weise mit dem Ventilstößel (54) lose verbunden ist und ist an seinem der Regelmembran (40) abgewandten Ende (110) ein Anschlagglied (112) trägt, das sich in der Betriebsstellung im Abstand von einem Regelmembranseitig von dem Anschlagglied (112) angeordneten, feststehenden Anschlag befindet.

## Beschreibung

Die Erfindung betrifft einen Druckminderer enthaltend:
(a) einen Gehäuseteil mit einem Einlaßanschluß und einem Auslaßanschluß, einer Trennwand zwischen Einlaßanschluß und Auslaßanschluß, die den Innenraum des Gehäuses in eine Einlaßkammer und eine Auslaßkammer teilt und die einen Durchbruch aufweist, und einem mit dem Durchbruch fluchtenden Stutzen, der mit der Einlaßkammer in Verbindung steht und ein Innengewinde aufweist,
(b) einen Druckminderereinsatz, der in den Stutzen und den Durchbruch eingesetzt ist, wobei der Druckminderereinsatz
   - ein Einsatzgehäuse von trichterförmiger Grundform aufweist, das an seinem weiten Ende durch eine Regelmembran abgeschlossen ist und eine Regeldruckkammer bildet, sowie
   - einen Ventilsitz, der über Stege mit dem Einsatzgehäuse des Druckminderereinsatzes verbunden und abdichtend in dem Durchbruch der Trennwand gehalten ist, wobei die Stege Kanäle enthalten, welche die Auslaßkammer mit der Regeldruckkammer verbinden, und
   - einen mit der Regelmembran und einem Membranteller verbundenen Ventilstößel, der sich durch den Ventilsitz hindurch erstreckt und an seinem Ende einen mit dem Ventilsitz zusammenwirkenden Ventilteller trägt,
(c) eine Schraubkappe, welche
   - mit einem Außengewinde in das Innengewinde des Stutzens eingeschraubt ist und den Rand der Regelmembran festklemmt,
   - ein verstellbares Federwiderlager enthält und
   - eine vorgespannte Schraubenfeder enthält, die sich an dem Federwiderlager abstützt und an dem Membranteller der Regelmembran anliegt, und
(d) ein zylindrisches Schmutzfängersieb, das den Druckminderereinsatz umgibt und zwischen der Trennwand und dem Einsatzgehäuse des Druckminderereinsatzes auswechselbar gehalten ist.

Druckminderer werden üblicherweise hinter einem Wasserzähler installiert. Sie haben die Aufgabe, die nachgeschaltete Installation unter dem reduzierten Versorgungsdruck zu halten. Die Regelmembran ist mit dem Druck in der Regeldruckkammer des Druckminderereinsatzes beaufschlagt. Diese Regeldruckkammer ist über die Kanäle in den Stegen mit der Auslaßkammer verbunden, also von dem Auslaßdruck stromab von dem Regelventil beaufschlagt. Diesem Druck wirkt an der Regelmembran die Vorspannung der Schraubenfeder entgegen. Bei einem Kräfte-Ungleichgewicht führt die Regelmembran mit dem Ventilstößel einen Hub aus. Dadurch wird der Auslaßdruck korrigiert. Der Auslaßdruck wird so auf einen Wert begrenzt, der durch die Vorspannung der Feder bestimmt ist. Diese Vorspannung kann durch Verstellen des Federwiderlagers verändert werden.

Bei diesen Druckminderern bildet der Druckminderereinsatz einen gesonderten, herausnehmbaren Bauteil. Das Schmutzfängersieb umgibt das Ventil des Druckminderereinsatzes einlaßseitig. Dadurch wird das Ventil von Schmutz geschützt, der mit dem zufließenden Wasser mitgeführt werden kann. Das schützt die Druckregelfunktion des Ventils. Außerdem wird die nachgeschaltete Installation von solchem Schmutz freigehalten.

Das Schmutzfängersieb muß in regelmäßigen Abständen gewartet und gereinigt werden, damit es sich nicht zusetzt. Zu diesem Zweck wird die Schraubkappe abgeschraubt. Dann kann der Druckminderereinsatz herausgezogen werden. Das gestattet dann ein Herausziehen des Schmutzfängersiebes. Das macht es bei bekannten Druckminderern erforderlich, vor der Demontage die Schraubenfeder von der Vorspannung zu entlasten. Anderenfalls würde beim Abschrauben der Schraubkappe die vorgespannte Schraubenfeder herausspringen. Ebenso wäre das Einschrauben der Schraubkappe nach der Wartung problematisch, weil ein Einfädeln des Gewindes der Schraubkappe in das Innengewinde am Stutzen des Gehäuses gegen die hohe Vorspannung der dann entsprechend zusammenzudrückenden Schraubenfeder in der Praxis nicht möglich ist.

Der Erfindung liegt die Aufgabe zugrunde, bei einem Druckminderer der eingangs genannten Art die Demontage und Wiedermontage zur Wartung des Schmutzfängersiebes zu erleichtern.

Erfindungsgemäß wird diese Aufgabe dadurch gelöst, daß
(e) ein Zuganker
   - sich durch das Federwiderlager erstreckt,
   - an seinem regelmembranseitigen Ende in einer die freie Beweglichkeit der Regelmembran und des Ventilstößels nicht beeinträchtigenden Weise mit dem Ventilstößel lose verbunden ist und
   - an seinem der Regelmembran abgewandten Ende ein Anschlagglied trägt, das sich in der Betriebsstellung im Abstand von einem Regelmembranseitig von dem Anschlagglied angeordneten, feststehenden Anschlag befindet.

Der Zuganker beeinträchtigt im Normalbetrieb die Funktion des Druckminderers und insbesondere das Arbeiten der Regelmembran und des Regelventils nicht. Beim Auseinandernehmen des Druckminderers in seine verschiedenen Baugruppen legt sich der Zuganker mit seinem Anschlagglied an den feststehenden Anschlag der Schraubkappe an. Dadurch wird die Schraubenfeder bei der Demontage zurückgehalten. Sie wird auch gespannt gehalten, so daß sie nicht bei der Wiedermontage des Druckminderers zusammengedrückt zu werden braucht. Das Einfädeln des Gewindes der Schraubkappe in das Innengewinde des Gehäuses wird durch die Vorspannung der Schraubenfeder nicht gestört. Beim Einschrauben wird schließlich das Anschlagglied wieder unter Überwindung der Vorspannung von dem Anschlag abgehoben. Das bietet aber nach dem Einfädeln der Gewinde keine Schwierigkeiten. Die neuerungsgemäße Konstruktion macht es möglich, die Einstellung der Schraubenfeder und damit des Sollwertes des Druckminderers während der Wartung des Schmutzfängersiebes unverändert zu lassen. Das ist sehr wichtig, weil diese Einstellung häufig plombiert ist und Fehleinstellungen zu schwerwiegenden Schäden an der nachgeschalteten Installation führen können.

Ausgestaltungen der Erfindung sind Gegenstand der Unteransprüche.

Ein Ausführungsbeispiel der Erfindung ist nachstehend unter Bezugnahme auf die zugehörigen Zeichnungen naher erläutert.

Fig.1 zeigt einen Längsschnitt durch einen Druckminderer.

Fig.2 zeigt eine Einzelheit einer abgewandelten Ausführung.

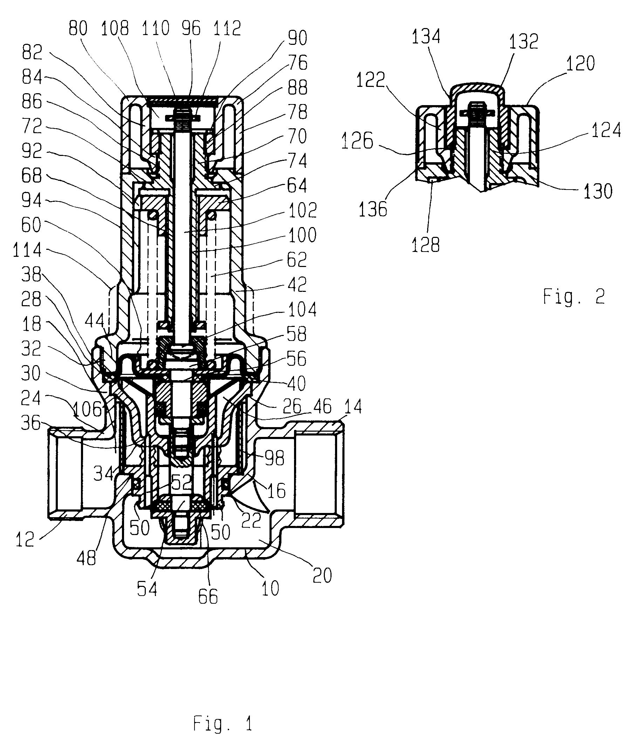

In Fig.1 ist mit 10 ein Gehäuse bezeichnet. Das Gehäuse 10 weist einen Einlaßanschluß und einen damit fluchtenden Auslaßanschluß 14 auf. Mit dem Einlaßanschluß 10 und dem Auslaßanschluß 12 ist das Gehäuse 10 in eine Wasserleitung eingebaut. Das Gehäuse 10 weist eine Trennwand 16 auf. Die Trennwand 16 unterteilt den Innenraum des Gehäuses 10 in eine Einlaßkammer 18 und eine Auslaßkammer 20. In der Trennwand 16 ist ein Durchbruch 22 gebildet.

Das Gehäuse 10 weist weiterhin einen Stutzen 24 auf. Der Durchmesser des Stutzens 24 ist größer als der Durchmesser des Einlaßanschlusses 12 und des Auslaßanschlusses 14. Die Achse des Stutzens 24 ist senkrecht zu der gemeinsamen Achse des Einlaßanschlusses 12 und des Auslaßanschlusses 14. Der Stutzen 24 fluchtet mit dem Durchbruch 22. Der Stutzen 24 bildet auf der Innenseite eine erste Ringschulter 26 sowie auswärts davon eine zweite Ringschulter 28. In einem Randteil 30 des Stutzens 24 ist ein Innengewinde 32 gebildet.

In den Stutzen 24 ist ein Druckminderereinsatz 34 eingesetzt. Der Druckminderereinsatz 34 hat trichterförmige Grundform. Der Druckminderereinsatz sitzt mit einem Rand 36 auf der ersten Ringschulter 26 auf. Auf der Stirnfläche des Randes 36 und der zweiten Ringschulter 28 liegt ein Dichtring 38. Auf dem Dichtring 38 liegt der Rand einer Regelmembran 40. Die Regelmembran 40 wird von einer Schraubkappe 42 festgeklemmt, die mit einem mit Außengewinde versehenen Rand 44 in das Innengewinde 32 des Stutzens 24 eingeschraubt ist.

Der Druckminderereinsatz 34 bildet mit der Regelmembran 40 eine Regeldruckkammer 46.

Der Druckminderereinsatz 34 weist ferner einen Ventilsitz 48 auf. Der Ventilsitz 48 ist abdichtend in den Durchbruch 22 eingesetzt. Der Ventilsitz 48 ist über Stege 50 mit dem die Regeldruckkammer 46 bildenden Einsatzgehäuse des Druckminderereinsatzes 34 verbunden. In den Stegen 50 verlaufen Kanäle 52, durch welche die Regeldruckkammer 46 mit der Auslaßkammer 20 verbunden ist. In der Regeldruckkammer 46 herrscht somit der Auslaßdruck.

An der Regelmembran 40 ist ein Ventilstößel 54 befestigt. Der Ventilstößel 54 weist unterhalb der Regelmembran 40 einen verdickten Abschnitt auf und erstreckt sich mit einem eingeschraubten Teil 56 durch die Regelmembran 40 hindurch. Der eingeschraubte Teil 56 weist einen Bund 58 auf. Die Regelmembran 40 sowie ein auf der Regelmembran 40 aufliegender Membranteller 60 sind zwischen dem verdickten Abschnitt und dem Bund 58 eingeklemmt.

Eine Schraubenfeder 62 ist an einem Federwiderlager 64 abgestützt. Das Federwiderlager 64 ist axial verstellbar. Dadurch kann die Vorspannung der Schraubenfeder 62 eingestellt werden. Diese Vorspannung der Schraubenfeder 62 wirkt an der Regelmembran 40 dem Druck in der Regeldruckkammer 46, also dem Auslaßdruck, entgegen. Durch die Regelmembran 40 wird der Ventilstößel 54 und ein daran sitzende, mit dem Ventilsitz 48 zusammenwirkender Ventilteller 66 so bewegt, daß ein Gleichgewichts-Zustand besteht. Die Einstellung der Vorspannung der Schraubenfeder 62 bestimmt daher den Auslaßdruck.

Das Federwiderlager 64 sitzt mit einer Gewindebohrung auf einer Gewindespindel 68. An die Gewindespindel 68 ist ein Kopf 70 angeformt. Der Kopf 70 ist in einem Durchbruch 72 in der Stirnfläche der Schraubkappe 42 geführt. Der Kopf 70 liegt mit einem Bund 74 an der Innenseite dieser Stirnfläche der Schraubkappe an. Der Durch den Durchbruch 72 hindurchragende Teil des Kopfes 70 ist mit einem Außengewinde versehen. Dieses Außengewinde ist in eine auf der Schraubkappe 42 sitzende Plombenkappe 76 eingeschraubt.

Die Plombenkappe 76 weist einen zylindrischen Außenteil 78, eine ringförmige Stirnfläche 80 und einen zu dem Außenteil 78 koaxialen, im wesentlichen zylindrischen Innenteil 82 auf. Der Außenteil 78 sitzt auf der Schraubkappe 42 auf. Der Innenteil bildet auf der Innenseite eine Ringschulter 84, an welche sich eine axiale Gewindebohrung 86 anschließt. In der Gewindebohrung 86 ist der Kopf 70 der Gewindespindel 68 geführt. Auf ein Außengewinde des Kopfes 70 ist weiterhin eine Mutter 88 aufgeschraubt. Die Mutter 88 weist einen radialen Schlitz 90 auf. Über den Schlitz 90 kann die Mutter 88 festgezogen werden. Sie drückt dann auf die Ringschulter 84 und zieht gleichzeitig den Bund 74 nach oben in Fig.1. Dadurch wird die Plombenkappe 76 an der Schraubkappe 42 festgeklemmt.

Das Federwiderlager 64 ist mit einer radialen Nase 92 in einem Axialschlitz 94 der Schraubkappe 42 geradgeführt. Bei einer Drehung der Gewindespindel 68 um ihre Längsachse wird daher das Federwiderlager 64 aufwärts und abwärts in Fig.1 bewegt. Zur Einstellung der Vorspannung der Schraubenfeder 62 wird die Mutter 88 gelöst. Dann kann die Gewindespindel 68 mit der Plombenkappe 76 verdreht. Das Federwiderlager 64 wird zur Einstellung des gewünschten Auslaßdrucks verstellt. Danach wird die Mutter 88 wieder festgezogen und gesichert und in die Plombenkappe eine Plombe 96 eingesetzt. Der eingestellte Auslaßdruck kann dann nicht ohne weiteres verändert werden.

Der Druckminderereinsatz 34 ist einlaßseitig von einem zylindrischen Schmutzfängersieb 98 umgeben. Das Schmutzfängersieb 98 sitzt in der Einlaßkammer 18. Das Schmutzfängersieb 98 ist zwischen dem sich trichterförmig erweiternden Teil des Druckminderereinsatzes und der Trennwand 16 gehalten. Dabei umgibt das Schmutzfängersieb 98 den Ventilsitz 48 und wird von diesem zentriert.

Eine Bohrung 100 erstreckt sich zentral durch den Kopf 70 und die Gewindespindel 68. Durch diese Bohrung 100 ist ein Zuganker 102 geführt. Dieser Zuganker 102 erstreckt sich damit auch durch das auf der Gewindespindel 68 geführte Federwiderlager 64 hindurch. Der Zuganker 102 ist an seinem regelmembranseitigen, in Fig.1 unteren, Ende 104 ballig ausgebildet und bildet eine Ringschulter. Eine Hutmutter 104 greift über das ballige Ende 104 mit der Ringschulter. Die Hutmutter 104 ist auf ein Außengewinde des über die Regelmembran 40 hinausragenden Endes des eingeschraubten Teils 56 aufgeschraubt. Die Hutmutter 104 ist dabei mit ihrer Stirnfläche gegen den Membranteller 60 festgezogen. Das ballige Ende 104 gestattet eine freie Beweglichkeit der Regelmembran 40 und des Ventilstößels 54 unbeeinflußt von dem Zuganker 102. Der Zuganker ist in Axialrichtung in der Bohrung 100 leicht beweglich.

Der Zuganker 102 ragt an dem entgegengesetzten, in Fig.1 oberen Ende aus der Bohrung 100 heraus in den Zwischenraum 108 zwischen der Stirnfläche des Kopfes 79 und der Plumbenscheibe 96. Das herausragende Ende 110 ist mit einer Querriffelung versehen. Auf der Querriffelung sitzt ein Anschlagglied 112 in Form einer Ringscheibe. Das Anschlagglied 112 befindet sich im normalen Betrieb des Druckminderers im Abstand von einem Anschlag, der hier von der Stirnfläche des Kopfes 70 gebildet ist. Das Anschlagglied 112 beeinträchtigt also bei normalem Betrieb die Funktion des Druckminderers ebenfalls nicht.

Wenn das Schmutzfängersieb 98 zu Wartungszwecken ausgebaut werden soll, dann wird die Schraubkappe 42 mittels eines Sechskants 114 aus dem Stutzen 24 herausgeschraubt. Dabei legt sich das Anschlagglied 112 an den Anschlag, nämlich die Stirnfläche des Kopfes 70, an. Mit dem Zuganker 102 wird der gesamte Druckminderereinsatz 34 über den Ventilstößel 54 und den Ventilteller 66 herausgezogen. Die gesamte Anordnung von Schraubkappe 42 und Druckminderereinsatz 34 bleibt als zusammenhängende Baugruppe erhalten. Es ist nicht erforderlich, die Schraubenfeder 42 vor der Demontage zu entspannen. Nach Reinigung oder Austausch des Schmutzfängersiebes 98 wird diese Baugruppe wieder in das Gehäuse 10 eingesetzt. Die Schraubkappe 42 kann bequem wieder in den Stutzen 24 eingeschraubt werden. Anschließend steht die Schraubenfeder 62 wieder unter der vorher eingestellten Vorspannung. Eine Neueinstellung ist nicht erforderlich. Eine Fehleinstellung kann nicht erfolgen.

Die Erfindung ist auch in gleicher Weise anwendbar bei Druckminderern, bei denen die Einstellung der Vorspannung der Schraubenfeder nicht plombiert ist. Fig.2 zeigt die von Fig.1 abweichenden Einzelheiten eines solchen Druckminderers.

In Fig.2 ist mit 120 ein Stellknopf bezeichnet, der etwa der Plombenkappe 76 entspricht. Der Stellknopf 120 weist einen Innenteil 122 mit einem Innengewinde auf, in welches der Kopf 124 der (in Fig.2 nicht dargestellten) Gewindespindel eingeschraubt ist. Der Innenteil 122 bildet eine Ringschulter 126. Die Gewindespindel weist, ähnlich wie bei der Ausführung von Fig.1, einen Bund 128 auf, der an der Innenseite der Schraubkappe 130 anliegt. Eine Hutmutter 132 ist auf das mit Gewinde versehene Ende des Kopfes 124 aufgeschraubt. Die Hutmutter 132 liegt mit ihrer Stirnfläche an der Ringschulter 126 an. Die Hutmutter 132 weist einen Vierkant 134 auf. Wenn die Hutmutter 132 über den Vierkant 134 festgezogen wird, dann drückt sie über die Ringschulter 126 den Außenteil 136 des Stellknopfes 120 gegen die Stirnfläche der Schraubkappe 130. Gleichzeitig wird über das Gewinde des Kopfes 124 der Bund 128 gegen die Innenseite der Schraubkappe 130 gezogen. Dadurch werden der Stellknopf 120 und die Gewindespindel festgeklemmt. Nach Lösen der Hutmutter 132 kann der Stellknopf 120 verdreht werden. Damit wird die Gewindespindel verdreht. Das bewirkt eine Verstellung des Federwiderlagers, wie im Zusammenhang mit Fig.1 beschrieben wurde.

In den übrigen Einzelheiten entspricht die Ausführung von Fig.2 der Ausführung gemäß Fig.1.

## Patentansprüche

1. Druckminderer enthaltend:
(a) einen Gehäuseteil (10) mit einem Einlaßanschluß (12) und einem Auslaßanschluß (14), einer Trennwand (16) zwischen Einlaßanschluß (12) und Auslaßanschluß (14), die den Innenraum des Gehäuses (10) in eine Einlaßkammer (18) und eine Auslaßkammer (20) teilt und die einen Durchbruch (22) aufweist, und einem mit dem Durchbruch (22) fluchtenden Stutzen (24), der mit der Einlaßkammer (18) in Verbindung steht und ein Innengewinde (32) aufweist,
(b) einen Druckminderereinsatz (34), der in den Stutzen (24) und den Durchbruch (22) eingesetzt ist, wobei der Druckminderereinsatz (34)
- ein Einsatzgehäuse von trichterförmiger Grundform aufweist, das an seinem weiten Ende durch eine Regelmembran (40) abgeschlossen ist und eine Regeldruckkammer (46) bildet, sowie
- einen Ventilsitz (48), der über Stege (50) mit dem Einsatzgehäuse des Druckminderereinsatzes (34) verbunden und abdichtend in dem Durchbruch (22) der Trennwand (16) gehalten ist, wobei die Stege (50) Kanäle (52) enthalten, welche die Auslaßkammer (20) mit der Regeldruckkammer (46) verbinden, und
- einen mit der Regelmembran (40) und einem Regelmembranteller (60) verbundenen Ventilstößel (54), der sich durch den Ventilsitz (48) hindurch erstreckt und an seinem Ende einen mit dem Ventilsitz (48) zusammenwirkenden Ventilteller (66) trägt,
(c) eine Schraubkappe (42), welche
- mit einem Außengewinde in das Innengewinde des Stutzens (24) eingeschraubt ist und den Rand der Regelmembran (40) festklemmt,
- ein verstellbares Federwiderlager (64) enthält und
- eine vorgespannte Schraubenfeder (62) enthält, die sich an dem Federwiderlager (64) abstützt und an dem Regelmembranteller (60) der Regelmembran (40) anliegt, und
(d) ein zylindrisches Schmutzfängersieb (98), das den Druckminderereinsatz (34) umgibt und zwischen der Trennwand (16) und dem Einsatzgehäuse des Druckminderereinsatzes (34) auswechselbar gehalten ist,
**dadurch gekennzeichnet, daß**
(e) ein Zuganker (102)
- sich durch das Federwiderlager (64) erstreckt,
- an seinem regelmembranseitigen Ende (104) in einer die freie Beweglichkeit der Regelmembran (40) und des Ventilstößels (54) nicht beeinträchtigenden Weise mit dem Ventilstößel (54) lose verbunden ist und
- an seinem der Regelmembran (40) abgewandten Ende (110) ein Anschlagglied (112) trägt, das sich in der Betriebsstellung im Abstand von einem Regelmembranseitig von dem Anschlagglied (112) angeordneten, feststehenden Anschlag befindet.

2. Druckminderer nach Anspruch 1, **dadurch gekennzeichnet, daß** das regelmembranseitige Ende (104) des Zugankers ballig ausgeführt ist.

3. Druckminderer nach Anspruch 2, **dadurch gekennzeichnet, daß**
(a) das regelmembranseitige Ende (104) des Zugankers (102) eine der Regelmembran (40) abgewandte Ringschulter bildet und
(b) eine über die Ringschulter greifende Hutmutter (106) auf das mit Gewinde versehene, durch den Membranteller (60) hindurchragende Ende des Ventilstößels (54) aufgeschraubt ist.

4. Druckminderer nach einem der Ansprüche 1 bis 3, **dadurch gekennzeichnet, daß**
(a) das Federwiderlager (64) in der Schraubkappe (42) durch eine Geradführung (92,94) unverdrehbar aber axial beweglich geführt ist,
(b) das Federwiderlager (64) weiterhin mit einem Innengewinde auf einer sich zentral in der Schraubkappe (42) erstreckenden, verdrehbaren Gewindespindel (68) geführt ist,
(c) der Zuganker (102) sich durch eine Längsbohrung (100) der Gewindespindel (68) erstreckt und
(d) das Anschlagglied (112) von einer Ringscheibe gebildet ist, die auf dem Ende (110) des Zugankers (102) im Abstand von der Stirnfläche der Gewindespindel (68) sitzt, wobei diese Stirnfläche den feststehenden Anschlag bildet.
